# EUROPEAN PATENT APPLICATION

(11) **EP 3 770 851 A1**
(43) Date of publication of application: **27.01.2021**
(21) Application number: 19920647.5
(22) Date of filing: 16.07.2019
(51) Int. Cl.: G06T 7/00, G06T 7/13

(54) **QUALITY INSPECTION METHOD FOR TARGET OBJECT, AND EDGE COMPUTING DEVICE**

(30) Priority: 23.05.2019 CN 201910432190
(71) Applicant: Wangsu Science & Technology Co., Ltd., Shanghai 200030 (CN)
(72) Inventor: SHEN, Jianfa, Shanghai 200030 (CN); LIN, Li, Shanghai 200030 (CN)
(74) Representative: Vinsome, Rex Martin
(86) International application number: PCT/CN2019/096174
(87) International publication number: WO 2020/232816

(57) **Abstract**

The present disclosure discloses a method for quality control of a target object and an edge computing device. The method includes: receiving, by an edge computing device, a target image of the target object (S1) to be quality controlled currently; and recognizing the target image based on a mathematical model provided by an edge computing platform, to determine whether the target object has a defect (S3). According to technical solutions of the present disclosure, efficiency of quality control of the target object can be improved while labor costs are reduced.

## Description

### CROSS-REFERENCE TO RELATED APPLICATIONS

The present disclosure is based on the Chinese Patent Application No. 201910432190.7, entitled "METHOD FOR QUALITY CONTROL OF TARGET OBJECT AND EDGE COMPUTING DEVICE" filed on May 23, 2019, which is incorporated by reference herein in its entirety.

### TECHNICAL FIELD

The present disclosure relates to Internet technologies, and in particular, to a method for quality control of a target object and an edge computing device.

### BACKGROUND

As industrial manufacturing levels are constantly improving, users and manufacturing enterprises have increasing high requirements for product quality. In addition to satisfying use performance, a product further needs to have fine surface quality. However, in a process of manufacturing the product, surface defects are often inevitable. The surface defect means a partial area on a product surface are uneven in physical or chemical properties, for example, a scratch, a spot, a hole, or a fold on the surface. The surface defects not only affect aesthetics and comfort of the product, but also usually cause bad effects on use performance of the product. Therefore, a manufacturing enterprise needs to detect the surface defects of the product, to effectively control product quality.

Currently, a conventional method for detecting a surface defect of a product is manual detection. However, this method brings disadvantages such as a low sampling rate, low accuracy, bad real-timeness, low efficiency, high labor intensity, and being prone to be affected by human experience and subjective factors. Therefore, a more effective product method for quality control is currently in an urgent need.

### SUMMARY

An objective of the present disclosure is to provide a method for quality control of a target object and an edge computing device, so that efficiency of quality control of the target object can be improved while labor costs are reduced.

In order to achieve the foregoing objective, an aspect of the present disclosure provides a method for quality control of a target object. The method includes: receiving, by an edge computing device , a target image of the target object to be quality controlled currently; and recognizing the target image based on a mathematical model provided by an edge computing platform, to determine whether the target object has a defect.

In order to achieve the above objective, another aspect of the present disclosure further provides an edge computing device. The edge computing device includes: a unit for receiving a target image, configured to receive a target image of a target object to be quality controlled currently; and a unit for recognizing a defect, configured to recognize the target image based on a mathematical model provided by an edge computing platform, to determine whether the target object has a defect.

In order to achieve the above objective, another aspect of the present disclosure further provides an edge computing device. The edge computing device includes a processor and a memory, where the memory is configured to store a computer program, and the computer program when executed by the processor causes the processor to perform the above method for quality control of a target object.

It can be learned from the above descriptions that, in the technical solutions of the present disclosure, a machine learning method may be used, and a large quantity of samples of the target object are trained, to obtain a mathematical model that can recognize a defect, so that the mathematical model can subsequently be used to detect whether a currently produced target object has a defect. Specifically, the edge computing device may locally store a trained mathematical model, and automatically detect, using the mathematical model, the target image of the target object to be quality controlled currently, to determine whether the target object in the target image has a defect. It can be learned from the above descriptions that, in the present disclosure, the mathematical model is trained to be obtained by using the machine learning method, and the defect of the target object can be automatically detected, so that significant labor costs are reduced and relatively high detection efficiency is achieved.

### BRIEF DESCRIPTION OF THE DRAWINGS

To describe technical solutions in embodiments of the present disclosure more clearly, the following briefly describes accompanying drawings for describing the embodiments. Apparently, the accompanying drawings in the following description show merely some embodiments of the present disclosure, and a person of ordinary skill in the art may derive other drawings from these accompanying drawings without creative efforts.
Fig. 1 is a schematic structural diagram of a production line system according to an embodiment of the present disclosure;
Fig. 2 is a schematic diagram of a method for quality control of a target object according to an embodiment of the present disclosure;
Fig. 3 is a schematic diagram of function modules of an edge computing device according to an embodiment of the present disclosure;
Fig. 4 is a schematic structural diagram of the edge computing device according to an embodiment of the present disclosure; and
Fig. 5 is a schematic structural diagram of a computer terminal according to an embodiment of the present disclosure.

### DETAILED DESCRIPTION

To make objectives, technical solutions, and advantages of the present disclosure clearer, the following further describes the embodiments of the present disclosure in detail with reference to accompanying drawings.

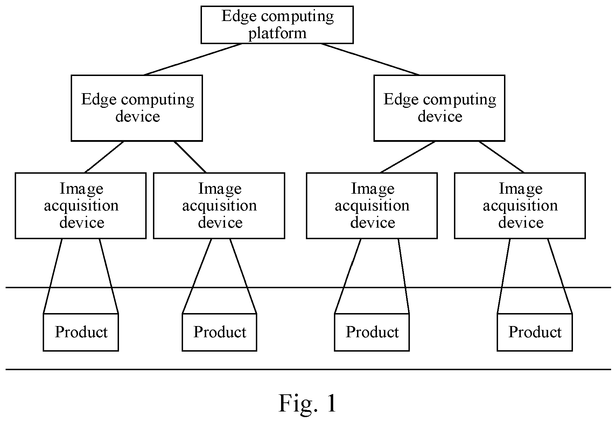

The present disclosure provides a method for quality control of a target object, and the target object may be any product produced on a production line. The method may be applied to a production line system shown in Fig. 1. In the production line system, a plurality of image acquisition devices with camera function may be deployed on a production platform of each product. The image acquisition device may take a picture for the product that finishes production in real time, to obtain video stream data of the product. The production line system may further include an edge computing platform and a plurality of edge computing devices. The edge computing device may be connected to one or more image acquisition devices, to obtain video stream data taken by the one or more image acquisition devices. On the one hand, the edge computing device may generate an image sample of a product based on the obtained video stream data, and may upload the image sample to the edge computing platform, to enable the edge computing platform to perform a process of training a mathematical model based on the image sample. On the other hand, the edge computing device may further detect a defect of the product based on the trained mathematical model. In actual applications, a computing capability of the edge computing device is usually lower than that of the edge computing platform. Therefore, simple computing processes such as defect detection and video stream data pre-processing may be completed on the edge computing device, and a complex computing process such as mathematical model training may be performed on the edge computing platform.

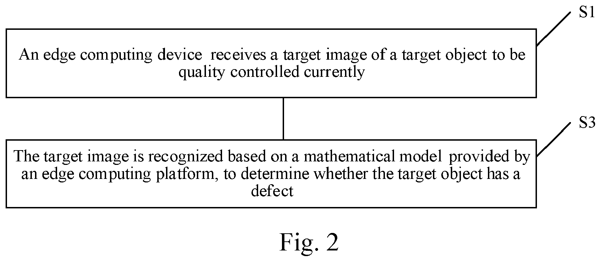

As shown in Fig. 2, a method for quality control of a target object in the present disclosure may be performed by the above edge computing device, and the method may include the following steps.

At SI, the edge computing device receives a target image of the target object to be quality controlled currently.

In the present embodiment, the image acquisition device and the edge computing device may communicate with each other in a wired or wireless manner. For example, the image acquisition device and the edge computing device may be connected by a network cable, so that video stream data taken by the image acquisition device is transmitted by the network cable. In addition, data may alternatively be transmitted between the image acquisition device and the edge computing device in a wireless communication manner such as WiFi, Bluetooth, ZigBee, or mobile communications (2G/3G/4G/5G). A tool for reading video stream may be installed on the edge computing device in advance, and a communication address of the image acquisition device may be configured in the tool for reading video stream. In this way, the edge computing device may obtain, in real time by using the tool for reading video stream, video stream data of the current target object taken by the image acquisition device. In a specific application example, the tool for reading video stream may be an ffmpeg tool, and the video stream data may be transmitted between the edge computing device and the image acquisition device according to the Real Time Streaming Protocol (RTSP).

In this embodiment, the video stream data may include different types of video frames. For example, the video stream data may include an I frame (key frame), a P frame (forward predictive coded frame), and a B frame (bidirectional predictive interpolation coding frame). The I frame may retain complete content of a video picture, the P frame usually retains only a difference from the I frame, and the B frame retains only a difference from two frames positioned before and after the B frame. In view of this, the I frame may be independently decoded, and can restore content of the video picture after being decoded. The P frame and the B frame cannot be independently decoded, and need to be decoded together with two frames positioned before and after the B frame, to restore the content in the video picture. Therefore, after obtaining the video stream data of the target object, the edge computing device may recognize, from the video stream data, a video frame that can be independently decoded and can restore the content in the video picture. Such a video frame may be used as a valid video frame of the target object.

In an embodiment, the different types of video frames in the video stream data may be recognized by using flag bits. Specifically, head information of a video frame may include a field used to represent a type of the video frame. For example, the field may be a picture_coding_type field. A type of the current video frame may be determined by recognizing a flag bit carried in the field. In this way, the edge computing device may traverse all video frames in the video stream data, and recognize a specified field in head information of the video frames. The specified field may be the picture_coding_type field. If a flag bit carried in the specified field indicates that the video frame is a key frame, the video frame may be used as a valid video frame of the target object. After all these valid video frames are decoded, complete content of the video frame may be presented, so that a defect of a product may be detected based on these valid video frames.

In this embodiment, a relatively large data amount of valid video frames are usually recognized from the video stream data, and if the recognized valid video frames are directly uploaded to an edge computing platform to enable the edge computing platform to train a mathematical model, relatively high bandwidth is consumed for data transmission, and further, a relatively large amount of data is needed to be processed in a process of training the mathematical model. In view of this, in this embodiment, the edge computing device may perform data filtering processing on the recognized valid video frames. Specifically, taken images of the target object usually have a same background, and therefore the background in the valid video frames may be filtered after the valid video frames are recognized. In actual applications, a background of the target object may be a pure color background, and a background color is different from both a color of the target object and a color of the target object that may exist a defect on the surface. For example, if the color of the target object is silver, and the color of the target object that may exist the defect on the surface is black, the background color may be green. In this way, information about the background color of the target object may be recorded into the edge computing device in advance, and when the edge computing device recognizes the valid video frame, the edge computing device may read the information about the background color, and filter the background color of a video picture presented by the valid video frame. In this way, the edge computing device may use data corresponding to the video picture of which the background color is filtered as feature data extracted from the valid video frame. A data amount of the feature data is less than a data amount of the valid video frame, so the data amounts in a transmission process and a training process can be reduced.

In another embodiment, the edge computing device may alternatively use a target detection algorithm to recognize the target object from the video picture presented by the valid video frame. In this way, the background color of the valid video frame can also be filtered, to obtain the feature data of the target object. In actual applications, the edge computing device may select one of numerous target detection algorithms to recognize the target object. The target detection algorithms may include algorithms such as a region-related convolutional neural network (R-CNN), a fast R-CNN, an inside-outside network (ION), and a hypernet.

Certainly, in actual applications, the edge computing device may optionally use another image compression algorithm to compress data of the valid video frame, and upload a compressed valid video frame to the edge computing platform. An algorithm used for reducing the data amount of the valid video frame is not limited in the present disclosure, and any algorithm that can reduce the data amount falls within the protection scope of the present disclosure.

In this embodiment, after extracting the feature data of the target object, the edge computing device may upload the feature data to the edge computing platform, so that the edge computing platform trains a mathematical model of the target object. Specifically, the feature data uploaded by the edge computing device may include various defects. At a stage of training the mathematical model, quality inspection personnel may manually annotate feature data in the edge computing platform, to annotate a type of a defect and a location of the defect included in the feature data. In this way, a manual annotation result of the feature data may be received by the edge computing platform. The edge computing platform may classify the feature data based on a defect type represented by the manual annotation result, to form a training sample set. The training sample set may have a large quantity of samples of the feature data with respect to each different defect type. Subsequently, the training sample set may be input into a preset mathematical model, to enable the preset mathematical model to be trained based on the training sample set.

In actual applications, the mathematical model may be an existing classifier. For example, the mathematical model may be a K-nearest neighbor classifier, a naive Bayes classifier, a support vector machine classifier, a decision tree classifier, or a convolutional neural network classifier. During training, a training sample may be input into the mathematical model, and an output result of the mathematical model may be a probability vector. For example, if the training sample includes a total of 13 different defect types, the output result of the mathematical model may be a probability vector including 13 probability values, wherein each probability value may represent a probability of a specific defect type. When whether the output result of the mathematical model is correct is determined, a defect type corresponding to a maximum probability value may be used as a defect type obtained through training based on the input training sample. At an initial stage of training, a predicted defect type may be inconsistent with an actual defect type of the input training sample. In this case, the mathematical model is needed to be corrected for a plurality of times until a result of recognizing a defect obtained after the trained mathematical model processes the input feature data is consistent with the manual annotation result of the input feature data. In this way, after a large quantity of training samples are constantly trained, parameters in the mathematical model may be corrected for a plurality of times, so that the mathematical model can correctly predict the defect type of the training sample.

At S5, the target image is recognized based on a mathematical model provided by the edge computing platform, so that whether the target object has a defect is determined.

In this embodiment, after completing training the mathematical model, the edge computing platform may feed back the mathematical model to the edge computing device. The edge computing device may locally store the mathematical model. In this way, after obtaining the target image to be quality controlled currently, the edge computing device may input the target image into the locally stored mathematical model, and determine, based on an output result of the mathematical model, whether the target object has a defect in the target image.

In actual applications, the mathematical model may include a model algorithm, model metadata, and a model weight parameter. The model algorithm may match a type of the mathematical model. For example, with respect to the convolutional neural network classifier, a convolutional neural network algorithm is used. The model metadata may be a training sample set used in the process of training the mathematical model. In actual applications, the training sample set may include a feature data set and a data set of various defects. The model weight parameter may be a threshold for determining a defect. Specifically, when whether the target object has a defect in the target image is determined, any target probability value in the probability vector may be compared with the model weight parameter. If the target probability value is greater than or equal to the model weight parameter, a defect type corresponding to the target probability value may be used as the defect in the target image of the target object. For example, with respect to the input target image, the output result of the mathematical model is a probability vector including 13 probability values. Then, the edge computing device may compare each of the 13 probability values with the model weight parameter. If only a probability value representing a black line in the 13 probability values is greater than the model weight parameter, it indicates that by detecting the target object in the target image using the mathematical model, the type of the defect of the target object in the target image is a black line. In addition, if all the probability values in the probability vector are less than the model weight parameter, it indicates that the target image has no defect. In this detection manner, if a plurality of probability values in the probability vector are greater than or equal to the model weight parameter, it indicates that the target object has two or more defects in the target image.

In another embodiment, the edge computing device may only need to determine, instead of considering a quantity of defects, whether the target object has a defect in the target image. In this case, the edge computing device may determine a maximum probability value from the plurality of probability values included in the probability vector, and compare the maximum probability value with the model weight parameter. If the maximum probability value is greater than or equal to the model weight parameter, a defect type corresponding to the maximum probability value may be used as the defect in the target image of the target object. If the maximum probability value is less than the model weight parameter, it indicates that the target image has no defect.

In this embodiment, when the edge computing device determines that the target object has a defect in the target image, it indicates that a process fault may occur on a production line of the target object. In this case, the edge computing device may send an instruction for stopping production to an industrial control device in a production workshop via an operation technology (OT) layer. In this way, the industrial control device may suspend the production line of the target object. In addition, the edge computing device may further send alarm prompt information, and annotate a location of the defect in the target image, to remind the quality inspection personnel of detecting the defect in the target image again. In actual applications, the alarm prompt information may be acousto-optic information, or may be text or graphics information presented on an electronic display board. After observing the defect location annotated in the target image, the quality inspection personnel may examine and repair the production line of the target object if the quality inspection personnel finds that there actually is a defect. If the quality inspection personnel finds no defect in the target image or finds that a recognized defect type is wrong, the quality inspection personnel may feed back an instruction for confirming a false alarm to the edge computing device, to indicate that a result of recognizing the target image by the edge computing device is wrong. In this case, it indicates that the mathematical model in the edge computing device may have a recognition error. In this case, the edge computing device may upload the target image to the edge computing platform. In this way, the edge computing device may generate a manual annotation result of the target image in the above manner, and may correct the trained mathematical model by using the manual annotation result, so that the corrected mathematical model can correctly determine, based on the target image, whether the target object has a defect. Finally, the edge computing platform may send the corrected mathematical model to the edge computing device. In this way, the edge computing device may receive the corrected mathematical model that is fed back by the edge computing platform, and replace the locally stored mathematical model with the corrected mathematical model, so that the edge computing device may recognize a defect by using the corrected mathematical model.

In this embodiment, different mathematical models may be trained with respect to different target objects. In this way, the edge computing device for may also locally store different mathematical models. When obtaining the target image of the target object, the edge computing device may first recognize a type of the target object, and may select a mathematical model that matches the type of the target object, to detect the target image.

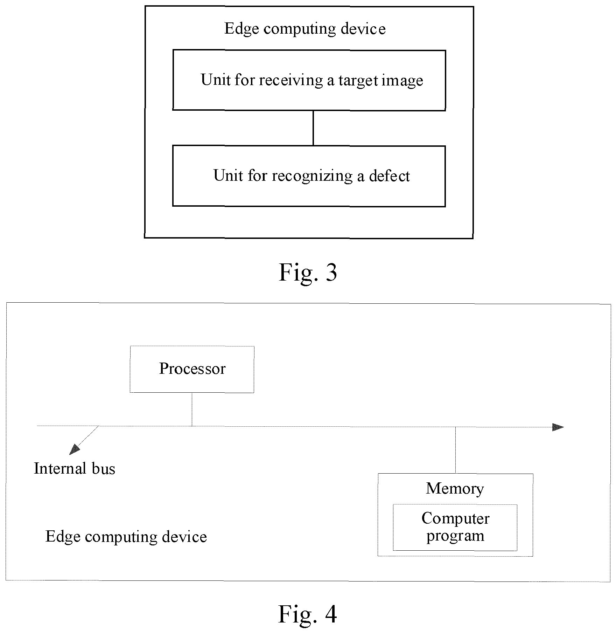

The present disclosure further provides an edge computing device. As shown in Fig. 3, the edge computing device includes:

a unit for receiving a target image, configured to receive a target image of a target object to be quality controlled currently; and

a unit for recognizing a defect, configured to recognize the target image based on a mathematical model provided by an edge computing platform, to determine whether the target object has a defect.

In an embodiment, the edge computing device further includes: a unit for extracting feature data, configured to: extract feature data of the target object from video stream data of the target object, and upload the feature data to the edge computing platform, so that the edge computing platform trains a mathematical model of the target object based on the received feature data.

In an embodiment, the unit for extracting feature data includes: a module for recognizing a valid video frame, configured to: recognize a valid video frame of the target object from the video stream data, and extract the feature data of the target object from the valid video frame.

In an embodiment, the module for recognizing a valid video frame includes: a module for recognizing a specified field, configured to: traverse all video frames in the video stream data, and recognize a specified field in head information of the video frames; and a module for recognizing a key frame, configured to take the video frame as the valid video frame of the target object if a flag bit carried in the specified field indicates that the video frame is a key frame.

In an embodiment, the module for recognizing a valid video frame includes: a module for filtering a background, configured to: read a background color of the target object, and filter the background color of a video picture presented by the valid video frame; and a module for determining feature data, configured to take, data corresponding to the video picture of which the background color is filtered as the feature data of the target object extracted from the valid video frame.

In an embodiment, the edge computing device includes: a unit for receiving an annotation result, configured to receive a manual annotation result of the feature data, where the manual annotation result is at least configured to indicate a defect type of the feature data; and a training unit configured to: classify the feature data based on the defect type, to form a training sample set, and train a preset mathematical model by using the training sample set, so that a result of recognizing a defect is consistent with the manual annotation result of the input feature data, wherein the result of recognizing a defect is obtained from processing the input feature data by the mathematical model after trained.

In an embodiment, the trained mathematical model includes at least a model weight parameter. The model weight parameter is used as a threshold for determining a defect, and an output result of the mathematical model is a probability vector including a plurality of probability values, where different probability values correspond to different defect types.

In an embodiment, a unit for quality control includes: a traversing and comparing module configured to: compare any target probability value in the probability vector with the model weight parameter, and use a defect type corresponding to the target probability value as the defect in the target image of the target object if the target probability value is greater than or equal to the model weight parameter.

In an embodiment, the unit for quality control includes: a module for comparing a maximum probability value with the model weight parameter, configured to: determine a maximum probability value from the plurality of probability values included in the probability vector, compare the maximum probability value with the model weight parameter, and use a defect type corresponding to the maximum probability value as the defect in the target image of the target object if the maximum probability value is greater than or equal to the model weight parameter.

In an embodiment, the edge computing device further includes: a unit for sending an instruction for stopping production, configured to send an instruction for stopping production to an industrial control device when the target object is determined to has a defect in the target image, so that the industrial control device suspends a production line of the target object; and an alarm prompt unit configured to: send alarm prompt information, and annotate a location of the defect in the target image.

In an embodiment, the edge computing device further includes: a unit for uploading a target image, configured to upload the target image to the edge computing platform if an instruction for confirming a false alarm with respect to the alarm prompt information is received, so that the edge computing platform corrects the mathematical model based on the target image; and a unit for replacing a model, configured to: receive the corrected mathematical model that is fed back by the edge computing platform, and replace a locally stored mathematical model with the corrected mathematical model.

As shown in Fig. 4, the present disclosure further provides an edge computing device . The edge computing device includes a processor and a memory. The memory is configured to store a computer program, and the computer program when executed by the processor causes the processor to perform the above method for quality control of a target object.

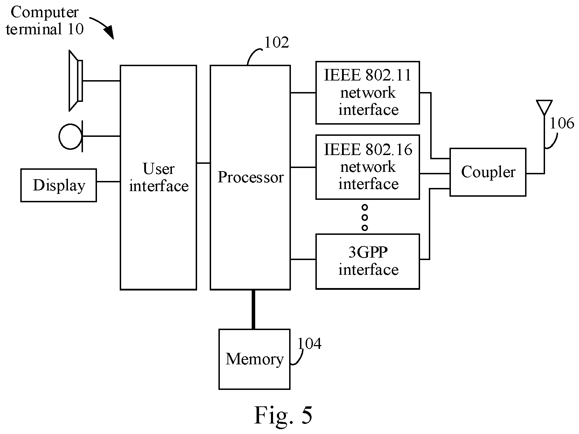

As shown in Fig. 5, in the present disclosure, all the technical solutions in the above embodiments may be applied to a computer terminal 10 shown in Fig. 5. The computer terminal 10 may include one or more (only one is shown in the figure) processors 102 (the processor 102 may include, but is not limited to, a processing apparatus such as a microprocessor (MCU) or a programmable logic device (FPGA)), a memory 104 configured to store data, and a transmission module 106 with a communication function. Those of ordinary skill in the art may understand that, the structure shown in Fig. 5 is merely an example and does not constitute a limitation on the structure of the above electronic apparatus. For example, the computer terminal 10 may further include more or fewer components than those shown in Fig. 5, or have a configuration different from that shown in Fig. 5.

The memory 104 may be configured to store a software program and a module of application software, and the processor 102 executes various function applications and performs data processing by running the software program and the module that are stored in the memory 104. The memory 104 may include a high-speed random access memory, and may also include a nonvolatile memory, for example, one or more magnetic storage apparatuses, flash memories, or other nonvolatile solid state memories. In some examples, the memory 104 may further include memories remotely disposed relative to the processor 102, and these remote memories may be connected to the computer terminal 10 via a network. Examples of the foregoing network include, but are not limited to, an Internet, an intranet, a local area network, a mobile communication network, and a combination thereof.

The transmission apparatus 106 is configured to receive or send data via a network. Specific examples of the above network may include a wireless network provided by a communications provider of the computer terminal 10. In an example, the transmission apparatus 106 includes a network interface controller (NIC), and the network interface controller may be connected to another network device via a base station to communicate with the Internet. In an example, the transmission apparatus 106 may be a radio frequency (RF) module, and is configured to communicate with the Internet in a wireless manner.

It can be learned from the above descriptions that, in the technical solutions of the present disclosure, a machine learning method may be used, and a large quantity of samples of the target object are trained, to obtain a mathematical model that can recognize a defect, so that the mathematical model can subsequently be used to detect whether a currently produced target object has a defect. Specifically, the edge computing device may obtain, in real time, video stream data of the target object taken in a production line, and the video stream data may include data of all the video frames. In actual applications, not every video frame can independently present an image of the target object. In view of this, after obtaining the video frame data of the target object, the edge computing device may recognize, from the video frame data, a valid video frame that can independently present the image of the target object, and after extracting feature data of the target object from the recognized valid video frame, the edge computing device may upload the feature data to the edge computing platform. After receiving a large amount of feature data of the target object, the edge computing platform may train the mathematical model of the target object based on the feature data by using a machine learning method. After completing training, the edge computing platform may send the trained mathematical model to the edge computing device. In this way, the edge computing device may locally store the trained mathematical model, and may automatically detect, by using the mathematical model, the target image of the target object to be quality controlled currently, to determine whether the target object in the target image has a defect. It can be learned from the above descriptions that, in the present disclosure, after the mathematical model is trained to be obtained by using the machine learning method, the defect of the target object can be automatically detected, so that significant labor costs are reduced and relatively high detection efficiency is achieved.

The embodiments of the present disclosure are all described in a progressive manner. For the same or similar parts in the embodiments, reference may be made to these embodiments. Each embodiment focuses on a difference from other embodiments. In particular, with respect to embodiments of the edge computing device, reference can be made to the embodiments of the above method.

Based on the above descriptions of the embodiments, a person skilled in the art may clearly understand that the embodiments may be implemented by software in addition to a necessary general hardware platform, or certainly may be implemented by a hardware. Based on such an understanding, the technical solutions essentially or the part contributing to the existing technologies may be implemented in a form of a software product. The software product is stored in a storage medium, such as a ROM/RAM, a hard disk, or an optical disc, and includes several instructions for enabling a computer device (which may be a personal computer, a server, a network device, or the like) to perform the methods described in the embodiments or some parts of the embodiments.

The above descriptions are merely examples of embodiments of the present disclosure, but are not intended to limit the present disclosure. Any modification, equivalent replacement, or improvement made without departing from the spirit and principle of this application should fall within the protection scope of this application.

## Claims

1. A method for quality control of a target object, comprising:
receiving, by an edge computing device, a target image of the target object to be quality controlled currently; and
recognizing the target image based on a mathematical model provided by an edge computing platform, to determine whether the target object has a defect.

2. The method according to claim 1, wherein the mathematical model is trained to be obtained based on video stream data of the target object, and a training method comprises the following steps:
extracting feature data of the target object from the video stream data of the target object, and uploading the feature data to the edge computing platform, and training, by the edge computing platform, a mathematical model of the target object based on the received feature data.

3. The method according to claim 2, wherein the extracting feature data of the target object from the video stream data of the target object comprises:
recognizing a valid video frame of the target object from the video stream data, and extracting the feature data of the target object from the valid video frame.

4. The method according to claim 3, wherein the recognizing a valid video frame of the target object from the video stream data comprises:
traversing all video frames in the video stream data, and recognizing a specified field in head information of the video frames; and using the video frame as the valid video frame of the target object if a flag bit carried in the specified field indicates that the video frame is a key frame.

5. The method according to claim 3, wherein the extracting the feature data of the target object from the valid video frame comprises:
reading a background color of the target object, and filtering the background color in a video picture presented by the valid video frame; and
taking data corresponding to the video picture of which the background color is filtered as the feature data of the target object extracted from the valid video frame.

6. The method according to claim 2, wherein the mathematical model is trained to be obtained by the edge computing platform in the following manner:
receiving, by the edge computing platform, a manual annotation result of the feature data, wherein the manual annotation result is at least used to represent a defect type of the feature data; and
classifying, by the edge computing platform, the feature data based on the defect type, to form a training sample set, and training a preset mathematical model by using the training sample set, so that a result of recognizing a defect is consistent with the manual annotation result of the input feature data, wherein the result of recognizing a defect is obtained from processing the input feature data by the mathematical model after trained.

7. The method according to claim 1 or 6, wherein the trained mathematical model comprises at least a model weight parameter, the model weight parameter is used as a threshold for determining a defect, and an output result of the mathematical model is a probability vector comprising a plurality of probability values, wherein different probability values correspond to different defect types.

8. The method according to claim 7, wherein the determining whether the target object has a defect in the target image comprises:
comparing any target probability value in the probability vector with the model weight parameter, and if the target probability value is greater than or equal to the model weight parameter, taking a defect type corresponding to the target probability value as a defect in the target image of the target object.

9. The method according to claim 7, wherein the determining whether the target object has a defect in the target image comprises:
determining a maximum probability value from the plurality of probability values in the probability vector, comparing the maximum probability value with the model weight parameter, and if the maximum probability value is greater than or equal to the model weight parameter, using a defect type corresponding to the maximum probability value as a defect in the target image of the target object.

10. The method according to claim 1, wherein the method further comprises:
when the target object is determined to have a defect in the target image, sending an instruction for stopping production to an industrial control device, so that the industrial control device suspends a production line of the target object; and
sending alarm prompt information, and annotating a location of the defect in the target image.

11. The method according to claim 10, wherein the method further comprises:
if an instruction for confirming a false alarm with respect to the alarm prompt information is received, uploading the target image to the edge computing platform, so that the edge computing platform corrects the mathematical model based on the target image; and
receiving the corrected mathematical model that is fed back by the edge computing device, and replacing a locally stored mathematical model with the corrected mathematical model.

12. An edge computing device, comprising:
a unit for receiving a target image, configured to receive a target image of a target object to be quality controlled currently; and
a unit for recognizing a defect, configured to recognize the target image based on a mathematical model provided by an edge computing platform, to determine whether the target object has a defect.

13. The edge computing device according to claim 12, wherein the edge computing device further comprises:
a unit for extracting feature data, configured to: extract feature data of the target object from video stream data of the target object, and upload the feature data to the edge computing platform, so that the edge computing platform trains a mathematical model of the target object based on the received feature data.

14. The edge computing device according to claim 13, wherein the feature data extraction unit comprises:
a module for recognizing a valid video frame, configured to: recognize a valid video frame of the target object from the video stream data, and extract the feature data of the target object from the valid video frame.

15. The edge computing device according to claim 14, wherein the module for recognizing a valid video frame comprises:
a module for recognizing a specified field, configured to: traverse all video frames in the video stream data, and recognize a specified field in head information of the video frames; and
a module for recognizing a key frame, configured to take the video frame as the valid video frame of the target object if a flag bit carried in the specified field indicates that the video frame is a key frame.

16. The edge computing device according to claim 14, wherein the module for recognizing a valid video frame comprises:
a module for filtering a background, configured to: read a background color of the target object, and filter the background color of a video picture presented by the valid video frame; and
a module for determining feature data, configured to take data corresponding to the video picture of which the background color is filtered as the feature data of the target object extracted from the valid video frame.

17. The edge computing device according to claim 12, wherein the edge computing device further comprises:
a unit for sending an instruction for stopping production, configured to send an instruction for stopping production to an industrial control device when the target object is determined to have a defect in the target image, so that the industrial control device suspends a production line of the target object; and
an alarm prompt unit configured to: send alarm prompt information, and annotate a location of the defect in the target image.

18. The edge computing device according to claim 17, wherein the edge computing device further comprises:
a unit for uploading a target image, configured to upload the target image to the edge computing platform if an instruction for confirming a false alarm with respect to the alarm prompt information is received, so that the edge computing platform corrects the mathematical model based on the target image; and
a unit for replacing a model configured to: receive the corrected mathematical model that is fed back by the edge computing platform, and replace a locally stored mathematical model with the corrected mathematical model.

19. An edge computing device, comprising a processor and a memory, wherein the memory is configured to store a computer program, and the computer program, when executed by the processor causes the processor to perform the method according to any one of claims 1 to 11.
